# EUROPÄISCHE PATENTSCHRIFT

(11) **EP 3 240 118 B1**
(45) Veröffentlichungstag und Bekanntmachung des Hinweises auf die Patenterteilung: **26.09.2018**
(21) Anmeldenummer: 16305494.3
(22) Anmeldetag: 28.04.2016
(51) Int. Cl.: B60R 16/02, H01R 13/74, H01R 13/502, H01R 13/52, H01R 9/03

(54) **ANORDNUNG ZUM FEUCHTIGKEITSDICHTEN VERBINDEN EINER TÜLLE MIT EINEM ELEKTRISCHEN KUPPLUNGSTEIL UND VERFAHREN ZUR HERSTELLUNG DERSELBEN**
ASSEMBLY FOR LINKING A SPOUT WITH AN ELECTRICAL COUPLING PART AND METHOD FOR PRODUCING THE SAME WHICH PRODUCES A MOISTURE SEAL
SYSTEME DE LIAISON IMPERMEABLE D'UN RACCORD A UN ELEMENT DE COUPLAGE ELECTRIQUE ET SON PROCEDE DE FABRICATION

(43) Veröffentlichungstag der Anmeldung: 01.11.2017
(73) Patentinhaber: Nexans, 92400 Courbevoie (FR)
(72) Erfinder: SCHWEIGL, Karl, 92693 ESLARN (DE); WALTER, Erhard, 92697 Georgenberg (DE); WALL, Markus, 92685 Floss (DE)
(74) Vertreter: Lenne, Laurence

(56) Entgegenhaltungen:
- US-A1- 2012 270 444
- US-A1- 2015 289 420
- US-A1- 2015 318 679

## Beschreibung

Die Erfindung bezieht sich auf eine Anordnung zum feuchtigkeitsdichten Verbinden einer aus elastomerem Material bestehenden Tülle mit einem aus mechanisch stabilem Material bestehenden elektrischen Kupplungsteil, wobei die Anordnung die Tülle und das Kupplungsteil umfaßt, bei welcher die Tülle einen Ansatz des Kupplungsteils umgibt, der einen nicht kreisförmigen Querschnitt hat und dessen Außenabmessungen den lichten Abmessungen der Tülle entsprechen, und bei welcher um den auf dem Ansatz des Kupplungsteils aufliegenden Bereich der Tülle ein Spannband herumgelegt und fest angezogen ist. Die Erfindung bezieht sich auch auf ein Verfahren zur Herstellung einer solchen Anordnung.

"Kupplungsteil" im Sinne der Erfindung können ein Stecker oder eine Buchse sein, die beispielsweise in zusammengesteckter Position eine elektrische Kupplung bilden. Ein Kupplungsteil kann aber auch direkt an ein elektrisches Gerät angeschlossen sein. Der Einfachheit halber wird in der folgenden Beschreibung statt des Wortes "Kupplungsteil" das Wort "Stecker" verwendet, stellvertretend auch für eine Buchse.

Eine Anordnung, wie sie eingangs beschrieben ist, ist seit langem bekannt und auf dem Markt erhältlich. Sie wird mit Vorteil in Kraftfahrzeugen eingesetzt, in deren Motorraum eine Vielzahl von elektrischen Leitungen angeordnet ist, die in Montageposition an elektrische Geräte angeschlossen sind. Zur elektrischen Verbindung werden in der Regel Stecker an den Enden der Leitungen angebracht, die feuchtigkeitsdicht mit der jeweiligen Leitung verbunden sein müssen. Dazu werden beispielsweise aus elastomerem Material oder auch aus Gummi bestehende Tüllen auf den Leitungen angebracht, die bis über einen Ansatz des Steckers ragen. Sie werden in üblicher Technik mittels eines Spannbands an den Ansatz des Steckers angepreßt. Das kann dann erfolgreich durchgeführt werden, wenn der Steckerkörper einen kreisrunden Querschnitt mit gleichförmiger Oberfläche hat. Bei einer Abweichung vom kreisrunden Querschnitt kann es vorkommen, dass das Spannband nur an exponierten Stellen des Ansatzes des Steckers fest genug anliegt. Die Verbindung zwischen Tülle und Stecker ist dann nicht feuchtigkeitsdicht.

US2015/0318679A1 offenbart eine Anordnung gemäss dem Oberbegriff des Anspruchs 1.

Der Erfindung liegt die Aufgabe zugrunde, die eingangs geschilderte Anordnung und das zugehörige Verfahren so zu gestalten, dass auch Stecker, die an ihren dem Anschluß einer Leitung dienenden Ende von der Kreisform abweichen, wirksam mittels einer Tülle abgedichtet werden können.

Diese Aufgabe wird gemäß der Erfindung dadurch gelöst, dass um die Tülle in ihrem zur Auflage auf dem Ansatz des Steckers bestimmtem Bereich eine aus in sich elastisch verformbarem Material bestehende, ringförmige Unterlage herumgelegt ist bzw. wird, deren Abmessungen in Umfangsrichtung der Tülle veränderbar sind, und um die das Spannband herumgelegt ist bzw. wird.

Mit dem Verfahren dieser Anordnung und der Anordnung selbst kann eine wirksame Abdichtung gegenüber Feuchtigkeit mittels einer Tülle auch für Stecker mit von der Kreisform abweichendem Querschnitt auf einfache Weise erreicht werden. Ein solcher Querschnitt ist beispielsweise oval bzw. länglich oval mit zwei einander gegenüberliegenden seitlichen Begrenzungen, die mit einem relativ kleinen Radius gebogen verlaufen. Es ist dabei von Bedeutung, dass der Stecker in dem Bereich, auf dem die Tülle montiert wird, eine gleichförmige umlaufende äußere Kontur ohne Eindellungen hat. Im Folgenden wird der Einfachheit halber ein ovaler Querschnitt des Steckers bzw. des Ansatzes desselben berücksichtigt.

Die Tülle hat einen dem Querschnitt des Ansatzes des Steckers entsprechenden lichten Querschnitt, der mit Vorteil etwas kleiner als die Außenabmessungen des Ansatzes ist. Die Tülle kann dann etwas aufgeweitet auf den Ansatz des Steckers aufgebracht werden. Sie liegt danach mit Vorspannung am Stecker an. Die auf die Tülle aufgebrachte ringförmige Unterlage ist nach ihrer Montage eine in sich elastisch verformbare, aber stabile Unterlage für das Spannband. Sie umgibt die Tülle rundum und kann beim Festziehen des Spannbandes insbesondere in Umfangsrichtung der Tülle ausweichen. Die Verbindungsstelle zwischen dem Ansatz des Steckers und der Tülle ist nach dem Anziehen des Spannbandes feuchtigkeitsdicht verschlossen.

Die ringförmige Unterlage wird im Folgenden kurz als "Ring" bezeichnet. Der Ring hat mit Vorteil eine glatte Oberfläche mit Gleiteigenschaften, so dass das Spannband beim Festziehen auf dem Ring gleiten kann und denselben nicht zusammenquetscht.

Die Tülle kann an ihrem zur Auflage auf dem Ansatz des Steckers dienenden Ende mit Vorteil in ihrer Wandung außen eine in Umfangsrichtung umlaufende Nut zur Aufnahme des Rings haben. Der Ring wird zweckmäßig vor dem Aufstecken der Tülle auf den Ansatz des Steckers in der Nut angebracht. Dazu kann mit Vorteil eine richtige bemessene Länge von einem Band größerer Länge abgetrennt und in die Nut eingelegt werden. Dabei muß der Ring in Umfangsrichtung nicht vollständig geschlossen sein, sondern es kann zwischen den Enden des Bandes auch eine kleine Lücke verbleiben.

Anordnung und Verfahren nach der Erfindung werden anhand der Zeichnungen als Ausführungsbeispiel erläutert.

Es zeigen:
Fig. 1 die beiden Teile der Anordnung nach der Erfindung, den Stecker und die Tülle, voneinander getrennt.
Fig. 2 eine Draufsicht auf die Anschlußseite des Steckers.
Fig. 3 einen in der Anordnung verwendbaren Ring.
Fig. 4 ein in der Anordnung verwendbares Spannband.
Fig. 5 den Stecker nach Fig. 1 mit aufgesteckter Tülle.
Fig. 6 eine gegenüber Fig. 5 ergänzte Montageposition der Anordnung.
Fig. 7 eine gegenüber Fig. 6 weiter ergänzte Montageposition der Anordnung.

Die Anordnung nach der Erfindung weist mit Vorteil einen Stecker mit einem Ansatz auf, der eine ovale bzw. länglich ovale Außenkontur hat. Die dazu passende Tülle weist einen entsprechenden lichten Querschnitt auf. Eine solche Anordnung hat gegenüber Teilen mit kreisrundem Querschnitt eine verminderte Bauhöhe, so dass der für ihre Montage benötigte Raum kleiner gehalten werden kann. Sie ist besonders auch dann von Vorteil, wenn zwei oder drei nebeneinander liegende elektrische Leitungen an den Stecker angeschlossen werden sollen. Der Stecker kann aus Metall oder aus einem mechanisch stabilen Kunststoff bestehen. Die lichten Abmessungen der Tülle können etwas kleiner als die Außenabmessungen des Steckers sein. Sie kann dann aufgeweitet auf den Stecker aufgebracht werden und liegt danach mit Vorspannung am Ansatz des Steckers an.

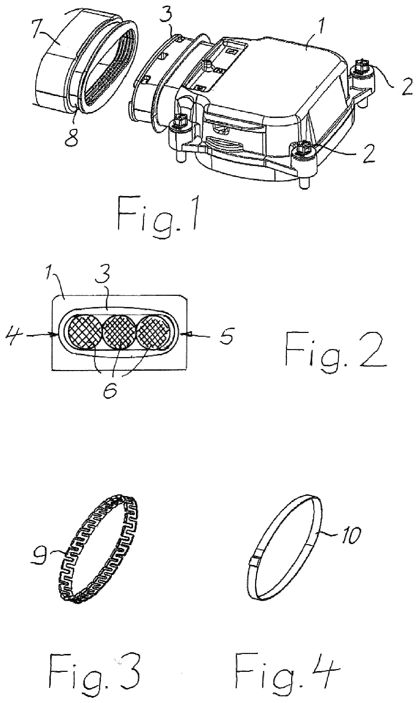

In Fig. 1 ist schematisch ein elektrischer Stecker 1 dargestellt, an den zwei oder mehr, nicht mit dargestellte elektrische Leitungen angeschlossen werden können. Der Stecker 1 kann beispielsweise mittels Schrauben 2 an einer Unterlage befestigt werden, die sich beispielsweise im Motorraum eines Kraftfahrzeugs befindet. Er hat auf seiner Unterseite, die im Montagezustand auf der Unterlage aufliegt, nicht mit dargestellte Steckkontakte, die in Montageposition in komplementäre Steckkontakte eingreifen, welche mit Vorteil zur Elektrik eines Kraftfahrzeugs gehören. Der Stecker 1 hat auf seiner für den Anschluß der Leitungen vorgesehenen Seite einen Ansatz 3, der eine ovale Außenkontur mit einer gleichförmig umlaufenden Umfangsfläche hat.

In Fig. 2 ist eine Draufsicht auf den Ansatz 3 des Steckers 1 dargestellt. Die äußere Kontur des Ansatzes 3 ist demnach oval bzw. länglich oval mit zwei einander gegenüberliegenden seitlichen Begrenzungen 4 und 5, die mit einem relativ kleinen Radius gebogen sind. Drei elektrische Leitungen sind schematisch durch kreuzschraffierte Kreise 6 angedeutet, die nebeneinander liegen und in Montageposition an innere Kontakte des Steckers 1 angeschlossen sind.

Zur Anordnung gehört auch eine Tülle 7 aus elastomerem Material, wie beispielsweise Silikon oder Gummi, die auf dem Ansatz 3 des Steckers 1 montiert werden soll. Sie hat auf ihrer zum Aufstecken bzw. Aufschieben auf den Ansatz 3 des Steckers 1 bestimmten Seite einen dem Querschnitt des Ansatzes 3 entsprechenden lichten ovalen Querschnitt. Die Wandstärke der Tülle 7 kann gemäß Fig. 1 in den einander gegenüberliegenden länglichen Bereichen vergrößert sein, so dass die ovale Form in der Außenkontur der Tülle 7 prägnanter ist. In diesem Bereich der Tülle 7 ist mit Vorteil in ihrer Wandung außen eine in Umfangsrichtung umlaufende Nut 8 angebracht, die zur Aufnahme eines in Fig. 3 dargestellten Rings 9 dient.

Der Ring 9 besteht aus einem in sich elastisch verformbarem Material, beispielsweise aus einem Thermoplast. Seine Abmessungen sind in Umfangsrichtung veränderbar. Das bedeutet, dass der Ring 9 in Umfangsrichtung sowohl gedehnt als auch gestaucht werden kann. Dazu ist er entsprechend der zeichnerischen Darstellung beispielsweise und mit Vorteil mäanderförmig aufgebaut. Er hat auf keinen Fall einen in seiner Umfangsrichtung durchgehenden Strang. Die Oberfläche des Rings 9 ist mit Vorteil glatt bzw. "rutschig", so dass sie gute Gleiteigenschaften hat. Ein im Montagezustand um den Ring 9 herumgelegtes, in Fig. 4 dargestelltes Spannband 10 kann dadurch beim Festziehen auf dem Ring 9 gleiten. Das Spannband 10 besteht mit Vorteil aus Stahl.

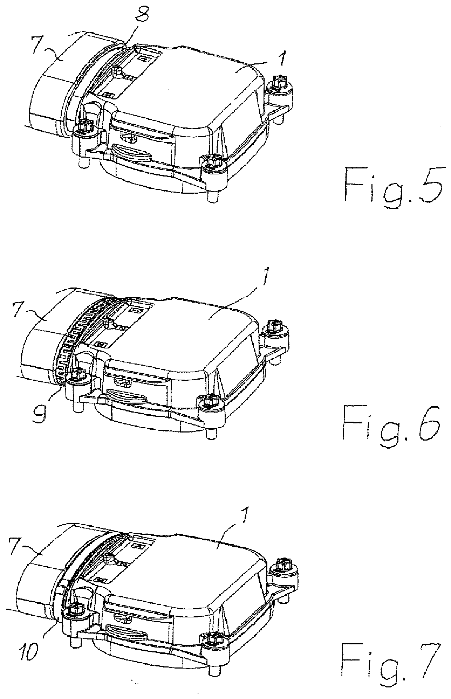

In Fig. 5 ist die Montageposition des Steckers 1 mit aufgesetzter Tülle 7 dargestellt. Für das Aufsetzen der Tülle 7 wird dieselbe mit Vorteil so aufgeweitet, dass sie relativ einfach auf den Ansatz 3 des Steckers 1 aufgeschoben werden kann. Sie legt sich dann nach Fortfall der aufweitenden Kraft mit Vorspannung fest an den Ansatz 3 des Steckers 1 an. Zweckmäßig wird vor dieser Aktion der Ring 9 bereits in die Nut 8 der Tülle 7 eingelegt. Es ergibt sich dann eine Montageposition der Anordnung gemäß Fig. 6. Der Ring 9 wird mit Vorteil mit geeigneter Länge von einem längeren Band abgetrennt und so in die Nut 8 eingebracht, dass sich ein möglichst geschlossener Ring ergibt. Der Ring kann aber auch eine kleine Lücke aufweisen. Wenn die Tülle 7 keine Nut 8 aufweist, wird der Ring 9 an entsprechender Position um die Tülle 7 so herumgelegt, dass er nicht verrutschen kann.

Abschließend wird das Spannband 10 um den Ring 9 herumgelegt und fest angezogen, so wie es aus der Montageposition gemäß Fig. 7 ersichtlich ist. Tülle 7 und Stecker 1 sind dann feuchtigkeitsdicht miteinander verbunden. Das Spannband 10 könnte ebenfalls, so wie für den Ring 9 beschrieben, bereits vor dem Aufschieben der Tülle 7 auf den Ansatz 3 des Steckers 1 über dem Ring 9 angeordnet werden. Er wird auch dann abschließend festgezogen.

## Patentansprüche

1. Anordnung zum feuchtigkeitsdichten Verbinden einer aus elastomerem Material bestehenden Tülle mit einem aus mechanisch stabilem Material bestehenden elektrischen Kupplungsteil, wobei die Anordnung die Tülle und das Kupplungsteil umfaßt, bei welcher die Tülle einen Ansatz des Kupplungsteils umgibt, der einen nicht kreisförmigen Querschnitt hat und dessen Außenabmessungen den lichten Abmessungen der Tülle entsprechen, und bei welcher um den auf dem Ansatz des Kupplungsteils aufliegenden Bereich der Tülle ein Spannband herumgelegt und fest angezogen ist, **dadurch gekennzeichnet, dass** um die Tülle (7) in ihrem zur Auflage auf dem Ansatz des Kupplungsteils (1) bestimmten Bereich eine aus in sich elastisch verformbarem Material bestehende, ringförmige Unterlage (9) herumgelegt ist, deren Abmessungen in Umfangsrichtung der Tülle (7) veränderbar sind, und um die das Spannband (10) herumgelegt ist.

2. Anordnung nach Anspruch 1, **dadurch gekennzeichnet, dass** die Tülle (7) eine in ihrer Wandung außen angebrachte, umlaufende Nut (8) aufweist, in welcher in Montageposition die ringförmige Unterlage (9) liegt.

3. Anordnung nach Anspruch 1 oder 2, **dadurch gekennzeichnet, dass** der Ansatz (3) des Kupplungsteils (1) eine ovale Außenkontur hat.

4. Anordnung nach einem der Ansprüche 1 bis 3, **dadurch gekennzeichnet, dass** die Tülle (7) einen der Kontur des Ansatzes (3) des Kupplungsteils (1) entsprechenden lichten Querschnitt hat.

5. Anordnung nach Anspruch 1, **dadurch gekennzeichnet, dass** die ringförmige Unterlage (9) mäanderförmig aufgebaut ist.

6. Anordnung nach Anspruch 1, **dadurch gekennzeichnet, dass** die ringförmige Unterlage (9) eine glatte Oberfläche hat, die für ein dieselbe umgebendes Medium gleitfähig ist.

7. Verfahren zum feuchtigkeitsdichten Anschließen einer aus elastomerem Material bestehenden Tülle an ein aus mechanisch stabilem Material bestehendes elektrisches Kupplungsteil, bei welchem die Tülle einen Ansatz des Kupplungsteils umgibt, der einen nicht kreisförmigen Querschnitt hat und dessen Außenabmessungen den lichten Abmessungen der Tülle entsprechen, und bei welchem um den auf dem Ansatz des Kupplungsteils aufliegenden Bereich der Tülle ein Spannband herumgelegt und fest angezogen wird, **dadurch gekennzeichnet,**
- **dass** die Tülle (7) zunächst auf einen Ansatz (3) des Kupplungsteils (1) aufgebracht wird, der eine ovale Außenkontur hat und dessen Außenabmessungen den lichten Abmessungen der Tülle (7) entsprechen,
- **dass** danach um die Tülle (7) eine aus in sich elastisch verformbarem Material bestehende, ringförmige Unterlage (9) herumgelegt wird, deren Abmessungen in Umfangsrichtung der Tülle (7) veränderbar sind, und
- **dass** abschließend um die ringförmige Unterlage (9) das Spannband (10) herumgelegt und fest angezogen wird.

## Claims

1. An arrangement for the moisture-proof connection of a sleeve consisting of elastomeric material with an electrical coupling part consisting of mechanically stable material, wherein the arrangement comprises the sleeve and the coupling part , in which the sleeve surrounds anextension of the coupling part, which has a non-circular cross section and the outer dimensions of which correspond to the internal dimensions of the sleeve, and in which a tightening band is placed around the area of the sleeve resting on the extension of the coupling part and is firmly tightened, **characterized in that** an annular base (9) consisting of in itself elastically deformable material is placed around the sleeve (7) in its area intended for resting on the extension of the coupling part (1), the dimensions of which can be changed in the circumferential direction of the sleeve (7), and around which the tightening band (10) is placed.

2. An arrangement according to Claim 1, **characterized in that** the sleeve (7) has a circumferential groove (8) arranged externally in its wall, in which groove the annular base (9) lies in the installation position.

3. An arrangement according to Claim 1 or 2, **characterized in that** the extension (3) of the coupling part (1) has an oval outer contour.

4. An arrangement according to any one of Claims 1 to 3, **characterized in that** the sleeve (7) has an internal cross section corresponding to the contour of the extension (3) of the coupling part (1).

5. An arrangement according to Claim 1, **characterized in that** the annular base (9) is constructed in a meandering manner.

6. An arrangement according to Claim 1, **characterized in that** the annular base (9) has a smooth surface, which is slidable for a medium surrounding the same.

7. A method for the moisture-proof connection of a sleeve consisting of elastomeric material to an electrical coupling part consisting of mechanically stable material, in which the sleeve surrounds anextension of the coupling part, which has a non-circular cross section and the outer dimensions of which correspond to the internal dimensions of the sleeve and in which a tightening band is placed around the area of the sleeve resting on the extension of the coupling part and is firmly tightened, **characterized in**
- **that** the sleeve (7) is initially applied to anextension (3) of the coupling part (1), which has an oval outer contour and the outer dimensions of which correspond to the internal dimensions of the sleeve (7),
- **that** then an annular base (9) consisting of in itself elastically deformable material is placed around the sleeve (7), the dimensions of which can be changed in the circumferential direction of the sleeve (7) and
- **that** finally the tightening band (10) is placed around the annular base (9) and is firmly tightened.

## Revendications

1. Dispositif pour la liaison étanche à l'humidité d'un embout en matériau élastomère avec une pièce de couplage électrique en matériau mécaniquement stable, le dispositif comprenant l'embout et la pièce de couplage, dans lequel l'embout entoure un élément de la pièce de couplage, qui présente une section non circulaire, et dont les dimensions extérieures correspondent aux dimensions intérieures de l'embout, et dans lequel, autour de la partie de l'embout s'appuyant sur l'élément de la pièce de couplage, est enroulée et serrée fermement une bande de serrage, **caractérisé en ce que**, autour de l'embout (7), dans sa partie déterminée pour l'appui sur l'élément de la pièce de couplage (1), est enroulée une sous-couche annulaire (9), constituée d'un matériau élastiquement déformable en soi, dont les dimensions sont variables dans la direction de la circonférence de l'embout (7), et autour de laquelle est enroulée la bande de serrage (10).

2. Dispositif selon la revendication 1, **caractérisé en ce que** l'embout (7) comprend une rainure circulaire (8) réalisée à l'extérieur sur sa paroi, dans laquelle se trouve, dans la position de montage, la sous-couche annulaire (9).

3. Dispositif selon la revendication 1 ou 2, **caractérisé en ce que** l'élément (3) de la pièce de couplage (1) présente un contour extérieur ovale.

4. Dispositif selon l'une des revendications 1 à 3, **caractérisé en ce que** l'embout (7) présente une section transversale intérieure correspondant au contour de l'élément (3) de la pièce de couplage (1).

5. Dispositif selon la revendication 1, **caractérisé en ce que** la sous-couche annulaire (9) est conçue en zigzag.

6. Dispositif selon la revendication 1, **caractérisé en ce que** la sous-couche annulaire (9) présente une surface lisse qui est glissante pour un milieu qui l'entoure.

7. Procédé de raccordement étanche à l'humidité d'un embout en matériau élastomère à une pièce de couplage en matériau mécaniquement stable, dans lequel l'embout entoure un élément de la pièce de couplage qui présente une section non circulaire et dont les dimensions extérieures correspondent aux dimensions intérieures de l'embout, et dans lequel, autour de la partie de l'embout s'appuyant sur l'élément de la pièce de couplage, est enroulée et serrée fermement une bande de serrage, **caractérisé en ce que**
- l'embout (7) est d'abord posé sur un élément (3) de la pièce de couplage (1), qui présente un contour externe ovale et dont les dimensions extérieures correspondent aux dimensions intérieures de l'embout (7),
- ensuite, autour de l'embout (7), est enroulée une sous-couche annulaire (9) en matériau déformable en soi, dont les dimensions sont variables dans la direction de la circonférence de l'embout (7) et
- finalement, autour de la sous-couche annulaire (9), est enroulée serrée fermement la bande de serrage (10).
